# FASCICULE DE BREVET EUROPEEN

(11) **EP 0 841 031 B1**
(45) Date de publication et mention de la délivrance du brevet: **05.11.2003**
(21) Numéro de dépôt: 97420187.3
(22) Date de dépôt: 07.10.1997
(51) Int. Cl.: A47J 37/08, G08B 17/103, H05B 6/80, G01N 21/53

(54) **Dispositif optique de sécurité pour appareil de cuisson**
Optisches Sicherheitsvorrichtung für Kochgeräte
Optical safety device for cooking appliance

(30) Priorité: 09.10.1996 FR 9612522
(43) Date de publication de la demande: 13.05.1998
(73) Titulaire: SEB S.A., 69130 Ecully (FR)
(72) Inventeur: Renk, Rémi, 88200 Remiremont (FR)

(56) Documents cités:
- EP-A- 0 729 024
- DE-A- 4 243 004
- FR-A- 2 609 342
- GB-A- 2 095 821
- GB-A- 2 261 502
- US-A- 4 199 755
- US-A- 5 493 119

## Description

La présente invention se rapporte au domaine des appareils électriques électroménagers de cuisson du type grille-pain.

La présente invention concerne un grille-pain comportant un dispositif de sécurité permettant notamment la détection de fumée et susceptible de remplir un certain nombre de fonctions se rapportant à la sécurité de fonctionnement des grille-pains dans diverses conditions d'utilisation. L'invention concerne également un procédé de détection optique pour piloter le fonctionnement d'un grille-pain.

La présente invention permet donc de réaliser un grille-pain comportant un dispositif de détection fumée et plus généralement de corps présentant une certaine opacité à la lumière (objet, main de l'utilisateur) et susceptible de piloter le fonctionnement, du grille-pain, en mettant en oeuvre une fonction stop-éject ou de coupure d'alimentation d'éléments chauffants.

Il est déjà connu de réaliser des dispositifs de détection de fumée dans une application aux fours micro-ondes. Ainsi le document US-A-5 493 119, qui est considéré comme l'état de la technique le plus proche, décrit un détecteur de présence de fumée ou de vapeur dans une chambre d'un four micro-ondes. Le détecteur comprend un émetteur optique, sous la forme d'une diode électroluminescente ainsi que deux récepteurs optiques du type phototransistor, permettant de recevoir un signal par transmission, réflexion et diffusion lorsque de la fumée ou de la vapeur d'eau passe à travers le détecteur, et plus précisément à travers la chambre d'analyse du détecteur, laquelle se trouve isolée optiquement par rapport à la lumière ambiante ou toute autre source lumineuse parasite. Ce document décrit également une électronique d'analyse permettant de reconnaître un accroissement de l'intensité du signal sur l'un des récepteurs et simultanément une décroissance de l'intensité du signal sur l'autre récepteur, consécutivement à un encombrement du chemin optique emprunté par le signal.

Un tel détecteur présente l'inconvénient de ne pouvoir fonctionner correctement ou de manière efficace lorsqu'il est soumis à des lumières ou des rayonnements parasites. Son emplacement précis, à l'abri de tous ces rayonnements parasites, est donc indispensable. Ceci entraîne des contraintes de montage particulières et des coûts de fabrication élevés, dans la mesure où les fumées doivent être canalisées et amenées dans une chambre de détection.

Il est également connu, par l'intermédiaire du document FR-A-2 609 342, de réaliser un dispositif comprenant une chambre dans laquelle pénètre de la fumée, une diode électroluminescente et un phototransistor. Ce document décrit également des moyens permettant d'élaborer un signal de sortie du phototransistor, et ce afin de détecter une atténuation d'un signal provenant de la diode électroluminescente. Un tel dispositif présente le désavantage qu'il comprend une chambre d'analyse, dans laquelle est agencé un système optique, et ce afin d'éviter l'influence de la lumière ambiante ou parasite sur la photodiode ou le récepteur optique. Un autre désavantage en résulte dans la mesure où les fumées doivent être canalisées et amenées dans la chambre d'analyse.

Un premier objet de la présente invention vise donc à remédier aux inconvénients de l'art antérieur et à réaliser un grille-pain comportant un dispositif de détection de fumée efficace et à réaction.

Un deuxième objet de la présente invention est de couper l'alimentation électrique des moyens de chauffe d'un grille-pain lors de la détection d'un corps ou objet proche de la chambre de cuisson et susceptible d'entraver la libre circulation de l'air hors de cette chambre de cuisson, ce qui peut entraîner des conséquences graves pour le fonctionnement de l'appareil par suréchauffement, pouvant amener un début d'incendie.

Un autre objet de la présente invention concerne la protection de l'utilisateur, lors d'une manipulation dangereuse de l'appareil par celui-ci, lorsque qu'un cycle de grillage est en cours. En effet, l'utilisateur, en manipulant l'appareil ou en tentant d'introduire sa main ou un objet métallique, prend le double risque de se brûler, ou, ce qui est plus grave, de s'électrocuter. Ainsi, le dispositif de sécurité évite tout risque d'éléctrocution en coupant l'alimentation des moyens de chauffe bien avant que tout objet ou la main de l'utilisateur n'atteigne les éléments sous tension. De plus, conjointement à cette coupure, le chariot porte-pain est libéré de sa position de grillage, occasionnant un bruit, pouvant être renforcé par une alarme, ce bruit étant susceptible de provoquer chez l'utilisateur le reflexe de retirer sa main.

L'objet de la présente invention vise donc à réaliser un système optique pouvant fonctionner correctement tout en étant soumis aux rayonnements ambiants et en éliminant les signaux s'y rapportant, de manière à piloter ou contrôler le fonctionnement du grille-pain.

Un autre objet de la présente invention vise à réaliser l'ensemble de ces fonctions avec des moyens peu coûteux et simples à mettre en oeuvre.

Un autre objet de la présente invention vise à réaliser un grille-pain comportant un dispositif optique de sécurité, permettant notamment la détection de fumée, sans pour autant utiliser une chambre d'analyse isolée par rapport au rayonnement du milieu ambiant.

Les objets assignés à la présente invention sont atteints à l'aide d'un grille-pain, comportant une chambre de cuisson équipée d'éléments chauffants, ainsi qu'un dispositif optique de sécurité qui évite tout risque d'électrocution en coupant l'alimentation des moyens de chauffe bien avant que tout objet ou la main de l'utilisateur n'atteigne les éléments sous tension, ledit dispositif comportant au moins un émetteur optique, au moins un détecteur optique et des moyens électroniques pour analyser un signal capté par le détecteur optique en reconnaissant une diminution de l'intensité du signal consécutivement à un encombrement du chemin optique emprunté par le signal, le détecteur et l'émetteur optiques étant montés sur le grille-pain, au dessus de la chambre de cuisson dudit grille-pain, et de manière à éviter un isolement optique du dispositif et/ou du chemin optique, par rapport aux rayonnements de l'environnement de cuisson de l'appareil.

Les objets de la présente invention sont également atteints à l'aide d'un procédé de détection de la présence d'un corps présentant une certaine opacité, consistant à reconnaître l'atténuation d'un signal optique suite à un encombrement du chemin optique emprunté par ledit signal et à piloter le fonctionnement d'un grille-pain tel que précédemment défini, consécutivement à une telle détection, caractérisé en ce qu'il consiste :
- à utiliser un rayonnement optique traversant au moins partiellement l'ambiance de cuisson du grille-pain,
- à utiliser un émetteur optique permettant de générer un signal optique pulsé,
- et à utiliser un détecteur optique associé à des moyens de filtration pour filtrer et isoler le signal utile reçu par le détecteur.

D'autres avantages et caractéristiques de l'invention ressortiront mieux à la lecture de la description donnée ci-après, en référence aux dessins annexés, donnés à titre d'exemples, et dans lesquels :
- La figure 1 représente un grille-pain comportant un dispositif conforme à l'invention.
- La figure 2 représente schématiquement un exemple de réalisation du système optique utilisé dans le dispositif conforme à l'invention.
- La figure 3 représente un schéma électronique du dispositif conforme à l'invention.
- La figure 4 représente un schéma électronique d'une variante de réalisation du dispositif conforme à l'invention.
- La figure 5 représente un schéma électronique d'une variante complémentaire de réalisation du dispositif conforme à l'invention.
- Les figures 6, 7, 8, 9 et 10 représentent différentes variantes de réalisation du système optique utilisé dans le dispositif conforme à l'invention.
- La figure 11 représente une vue en coupe d'une variante préférentielle du dispositif conforme à l'invention.

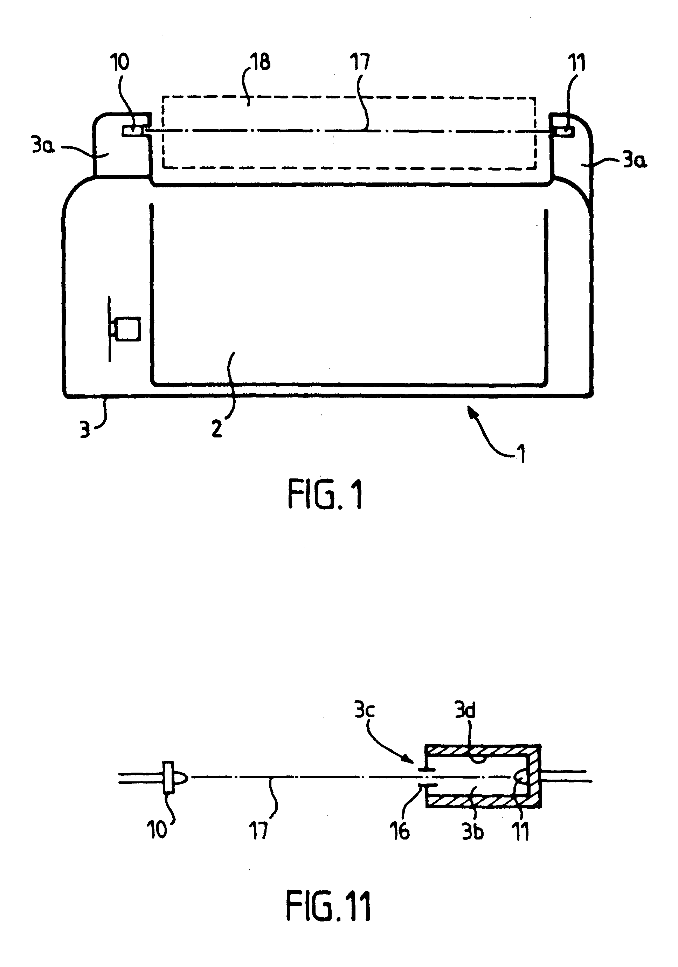

La figure 1 représente un grille-pain 1, constitué notamment d'un bâti 3 et d'une chambre de cuisson 2, laquelle est destinée à recevoir des tranches de pain.

Le bâti 3 comporte également des rehaussements 3a s'étendant de part et d'autre du grille-pain 1, pour y loger d'une part un émetteur optique 10, d'autre part un récepteur optique 11, de manière à définir un chemin optique 17, s'étendant de l'émetteur optique 10 vers le récepteur optique 11, au dessus de la chambre de cuisson 2. Il est ainsi possible de disposer l'émetteur 10 et le récepteur optique 11 de façon à définir le chemin optique 17 à travers la chambre de cuisson 2. L'émetteur et le récepteur optique 10, 11 sont ainsi montés sur le grille-pain 1, de manière à éviter un isolement optique du dispositif par rapport aux rayonnements de l'environnement de cuisson de l'appareil. Le système optique utilisé dans le dispositif conforme à l'invention est effectivement localisé à un endroit où l'influence de la lumière ambiante ou du rayonnement parasite ou gênant ne peut être évitée. Avantageusement le chemin optique s'étend dans le sens de la plus grande dimension du grille-pain. Dans une variante de réalisation plusieurs paires émetteurs-récepteurs peuvent également être agencées dans le bâti 3. Il s'avère intéressant de disposer les couples émetteurs-récepteurs perpendiculairement à la plus grande dimension d'une fente d'un grille-pain.

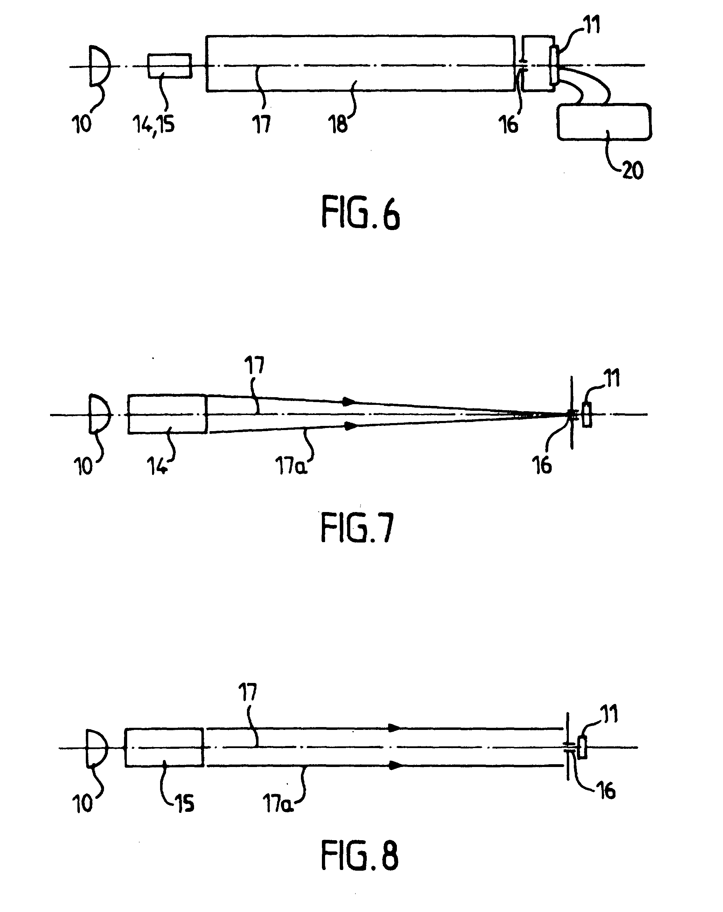

Avantageusement l'émetteur 10 et le détecteur optique 11 sont disposés de façon à définir le chemin optique à travers l'ambiance de cuisson du grille-pain 1. Par ambiance de cuisson, il faut bien évidemment entendre le volume interne de la chambre de cuisson 2 ou un espace situé au voisinage de ladite chambre de cuisson 2 et de préférence au-dessus de cette dernière. Un tel espace est traversé par des fumées issues d'une cuisson ou d'un grillage. Le dispositif de sécurité conforme à l'invention comporte ainsi un système optique agencé au voisinage d'une colonne d'air chaud 18, laquelle est localisée au voisinage d'un environnement de cuisson, tel que cela est représenté à la figure 6 notamment. En disposant ce système de sécurité au dessus de la chambre de cuisson, dans le flux d'air chaud sortant de l'enceinte de cuisson, on permet, non seulement au dispositif de détecter une fumée sortant de l'appareil, mais également à ce qu'aucun objet, voire la main de l'utilisateur ne puisse être mis à l'intérieur de l'enceinte de cuisson sans provoquer un arrêt de l'appareil.

Avantageusement le système optique est réalisé à l'aide d'un système de focalisation 14 ou d'un système de collimation 15 associé à un diaphragme 16, lequel est disposé devant le détecteur optique 11. Ce dernier est relié à des moyens électroniques 20 pour analyser le signal capté par le détecteur optique 11 et reconnaître ainsi les diminutions de l'intensité du signal consécutivement à un encombrement du chemin optique 17 emprunté par ledit signal.

La figure 6 représente un exemple de réalisation du système optique utilisé dans le dispositif conforme à l'invention. Deux variantes de réalisation pour le système optique sont représentées aux figures 7 et 8. Ainsi la figure 7 représente schématiquement un faisceau optique 17a s'étendant le long du chemin optique 17 pour atteindre le récepteur optique 11 à travers le diaphragme 16. Le faisceau optique 17a est convergent suite à son passage à travers le système de focalisation 14.

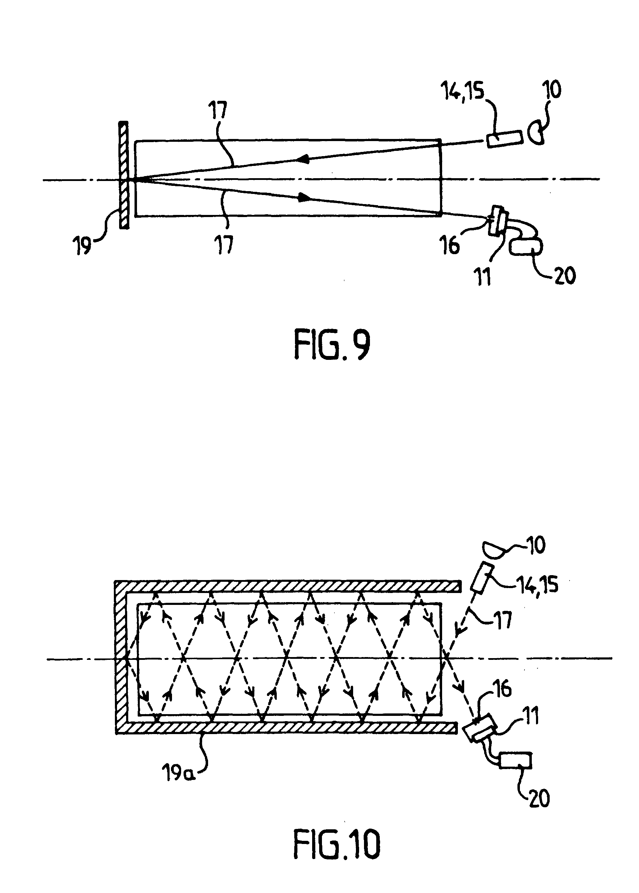

Dans l'exemple de réalisation représenté à la figure 8, le faisceau optique 17a est un faisceau parallèle issu du système de collimation 15. Il est également envisageable d'utiliser une réflexion du signal optique à l'aide d'un miroir 19 ou de toute autre pièce réfléchissante. Le chemin optique 17 ainsi obtenu permet de disposer l'émetteur optique 10 et le récepteur optique 11, par exemple du même côté du grille-pain 1. Il en est de même pour le système de focalisation 14 ou de collimation 15 et du diaphragme 16. Un tel exemple de réalisation est représenté à la figure 9. Dans une autre variante de réalisation du dispositif conforme à l'invention, l'émetteur 10 et le récepteur 11 sont disposés côte à côte de façon à obtenir un angle d'incidence quasiment nul pour le chemin optique 17.

La figure 10 représente un autre exemple de réalisation pour un système optique, utilisant des réflexions multiples sur un ensemble de parois pour obtenir un chemin optique 17 bien plus complexe et couvrant selon le cas un volume de surveillance plus important. Un système de miroir 19a présentant des configurations plus ou moins complexes peut ainsi être conçu. Le système réfléchissant 19a représenté à la figure 10 est par exemple constitué d'un matériau réfléchissant réparti sur trois surfaces d'un volume interne du grille-pain 1.

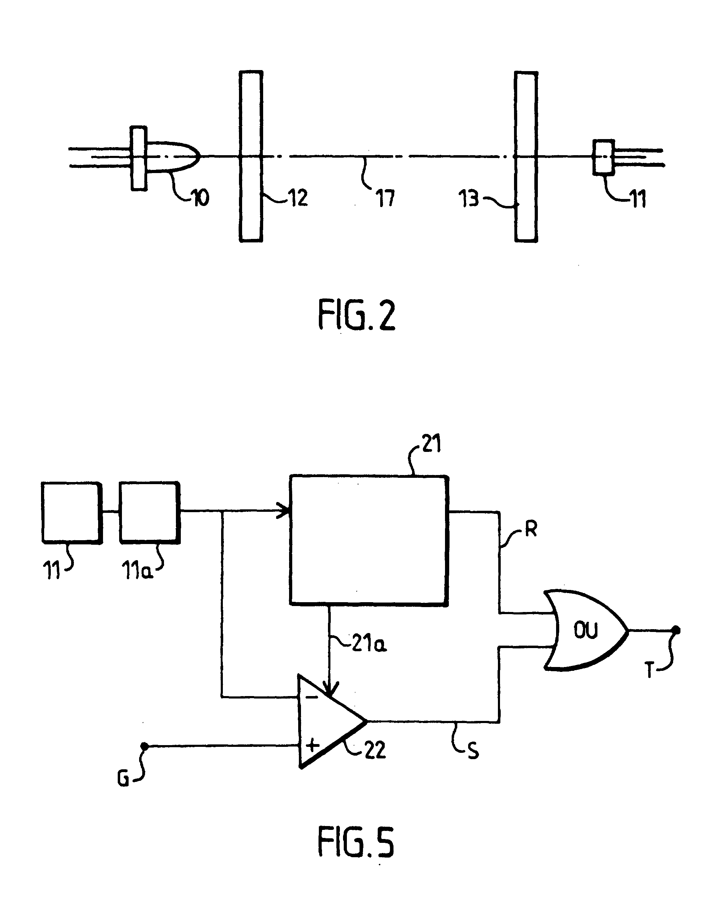

Un autre exemple de réalisation du système optique intégré dans le dispositif de sécurité du grille-pain conforme à l'invention est représenté à la figure 2. Cette dernière schématise l'émetteur optique 10 et le récepteur optique 11 associés à un polariseur 12 et un analyseur 13 agencés sur le chemin optique 17. Le polariseur 12 et l'analyseur 13 permettent ainsi de filtrer le signal optique émis par l'émetteur optique 10 en polarisant le rayonnement émis et en détectant par l'intermédiaire du détecteur optique 11 un signal présentant la même polarisation que celui issu du polariseur 12. Un tel système permet ainsi de diminuer l'influence de rayonnements optiques parasites. D'autres moyens connus de filtration du signal, tel que des filtres de couleur, peuvent également être utilisés sans sortir du cadre de la présente invention.

Un autre mode de réalisation du dispositif conforme à l'invention est représenté à la figure 11, dans laquelle le détecteur optique 11 est monté au fond d'un canal 3b. Ce dernier présente une ouverture 3c centrée sur le chemin optique 17. L'ouverture 3c peut avantageusement être associée à un diaphragme 16, de manière à limiter les rayonnements parasites arrivant sur le détecteur 11. Alternativement, l'ouverture 3c présente une dimension telle, qu'elle forme le diaphragme 16. Le canal 3b présente de préférence une paroi interne susceptible d'absorber les rayonnements optiques. Les rayonnements optiques parasites présentant une incidence élevée par rapport au chemin optique 17, sont ainsi absorbés et n'arrivent pas au détecteur 11 ou ne pénètrent pas dans le puits formé par le canal 3b.

Préférentiellement, les moyens électroniques 20 comprennent des moyens d'autocalibration pour fixer un seuil d'intensité du signal à chaque mise en marche de l'appareil. Ce seuil d'intensité permet de déceler la présence de fumée entre l'émetteur 10 et le récepteur optique 11 ou tout simplement une obturation du chemin optique 17, avec une sensibilité optimale malgré le vieillissement ou l'encrassement du système optique.

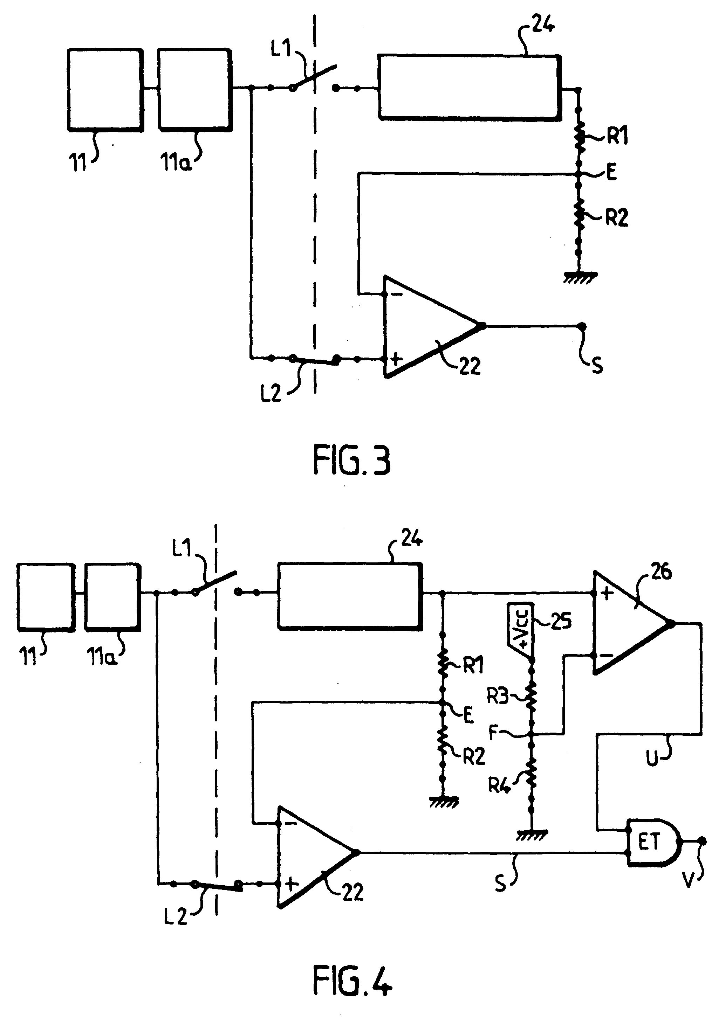

La figure 3 représente un exemple de réalisation des moyens électroniques 20 permettant de réaliser les fonctions du dispositif conforme à l'invention et notamment des moyens d'autocalibration. Ces derniers sont obtenus à l'aide d'un échantillonneur bloqueur 24 relié au détecteur optique 11 par l'intermédiaire d'un interrupteur L1 et d'un conditionneur 11a délivrant un signal apte à être traité par l'électronique en aval. L'échantillonneur bloqueur 24 est également relié à la masse par l'intermédiaire d'un pont diviseur constitué de résistances électriques R1 et R2. Les moyens électroniques 20 comprennent également un comparateur 22 dont l'entrée inverseuse est reliée à un point de connexion E situé entre les résistances R1 et R2. L'entrée non inverseuse du comparateur 22 est reliée par l'intermédiaire d'un interrupteur L2 à la sortie du détecteur 11. On applique ainsi sur l'entrée non inverseuse du comparateur 22, le signal optique reçu et transformé en un signal électrique par le conditionneur 11a lorsque l'interrupteur L2 est fermé. Le pont diviseur à la sortie de l'échantillonneur bloqueur 24 fixe ainsi une tension proportionnelle et inférieure à la tension échantillonnée. Cette tension échantillonnée correspond au seuil de détection de fumée.

A chaque mise en route du grille-pain 1, l'interrupteur L1 se trouve en position fermée pendant un intervalle de temps correspondant à la phase d'échantillonnage, pour appliquer une tension seuil sur l'entrée inverseuse du comparateur 22. L'ouverture de l'interrupteur L1 et la fermeture de l'interrupteur L2 sont déterminées par une unité de contrôle et de séquencement non représentée aux figures. L'unité de contrôle et de séquencement invalide la sortie du comparateur 22 pendant la phase d'échantillonnage.

La valeur de cette tension seuil prise au point de connexion E dépend directement de l'intensité du signal optique reçu par le détecteur optique 11. La tension prise au point de connexion E est donc l'image instantanée de l'état de fonctionnement du système optique à chaque début de cycle ou d'utilisation de l'appareil de cuisson. L'interrupteur L1 peut ensuite être ouvert dans la mesure où l'échantillonneur bloqueur 24 permet de maintenir le point de connexion E à un potentiel électrique sensiblement constant pendant un intervalle de temps relativement important et suffisant pour effectuer une cuisson.

Au cours du fonctionnement du grille-pain 1, l'interrupteur L2 se trouve fermé et applique sur l'entrée non inverseuse du comparateur 22 un signal électrique correspondant au signal optique reçu par le détecteur optique 11. Une variation de l'intensité du signal optique influencera le signal électrique appliqué sur l'entrée non inverseuse du comparateur 22. Il apparaît ainsi que le signal électrique présent à la sortie S du comparateur 22 est directement représentatif de la présence ou de l'absence, dans la colonne d'air chaud 18 correspondant à la zone de détection, d'un corps ou substance pouvant provenir de la chambre de cuisson (fumée) ou de l'extérieur (tout objet, main de l'utilisateur...).

Dans le cadre d'un fonctionnement normal, la sortie S se trouve à un niveau haut dans la mesure où le potentiel électrique appliqué sur l'entrée non inverseuse du comparateur 22 est supérieur au potentiel électrique seuil du point de connexion E. Lorsqu'en revanche de la fumée ou l'intrusion d'un objet obture au moins partiellement le passage pour le signal optique, le potentiel électrique appliqué sur l'entrée non inverseuse du comparateur 22 diminue et entraîne le basculement vers un niveau bas de la sortie S.

Le basculement de la sortie S vers un niveau bas, est susceptible de déclencher instantanément les moyens de coupure de l'alimentation électrique du grille-pain. Selon le besoin, le rôle des entrées inverseuse et non inverseuse du comparateur 22 peuvent être permutées de manière à inverser le sens de basculement de la sortie S. La sortie S se trouve inhibée pendant la période d'échantillonnage correspondant à la fermeture de l'interrupteur L1.

L'échantillonneur bloqueur 24 permet ainsi d'appliquer un potentiel seuil au point de connexion E variable dans le temps et plus précisément tenant compte de poussières ou d'encrassements sur les moyens optiques et/ou de vieillissement des moyens optiques et électroniques 20 utilisés. L'autocalibration du système optique dans le dispositif conforme à l'invention se fait donc à chaque mise en route ou utilisation d'un appareil pourvu d'un tel dispositif de sécurité.

Cette autocalibration est nécessaire, compte-tenu que le dispositif de sécurité n'est pas uniquement une barrière optique au fonctionnement binaire. La détection doit s'appliquer aussi bien à des corps totalement opaques (par exemple la main de l'utilisateur), qu'à des corps ou substances dont l'opacité est variable (fumée), une partie de la lumière émise étant alors détectée. Pour ces derniers notamment, il est nécessaire que le seuil d'affaiblissement du signal, correspondant à la présence de cette substance, puisse être reproductible lors du vieillissement et/ou l'encrassement du dispositif, afin de garder ce niveau ajusté et précis de détection.

La figure 4 représente un schéma de montage d'une variante de réalisation de moyens électroniques 20 du dispositif conforme à l'invention. Cette variante de réalisation constitue une amélioration des moyens électroniques 20 représentés à la figure 3. Cette amélioration permet de réaliser une fonction complémentaire, à savoir un contrôle du potentiel seuil appliqué au point de connexion E. Ainsi, l'entrée inverseuse d'un deuxième comparateur 26 est reliée à un point de connexion complémentaire F, localisé entre des résistances R3 et R4 d'un second pont diviseur, lequel est connecté sur une alimentation continue 25. L'entrée non inverseuse du deuxième comparateur 26 est reliée à la sortie de l'échantillonneur bloqueur 24.

Le deuxième comparateur 26 est donc en mesure de délivrer un signal de contrôle U sur une porte logique ET, laquelle reçoit aussi le signal de sortie S du comparateur 22. La porte logique ET réalise ainsi une sortie de validation V agissant sur des moyens de commande de l'appareil.

En effet, le signal de contrôle U en sortie du deuxième comparateur 26 est appliqué sur la porte logique ET en même temps que le signal de sortie S du comparateur 22. Ainsi la sortie de validation V se trouve à un niveau haut lorsque le signal de sortie S et le signal de contrôle U sont simultanément à un niveau haut. Une telle situation correspond à un fonctionnement normal du détecteur 11.

Un signal à un niveau bas à la sortie de contrôle U peut provenir par exemple d'une obturation très importante ou anormale du détecteur optique 11. Une telle situation permet d'obtenir à l'entrée non inverseuse du deuxième comparateur 26, un potentiel électrique très faible et inférieur au potentiel correspondant à un seuil minimum. L'utilisation du seuil minimum, pour la tension délivrée par l'échantillonneur bloqueur 24, correspondant au potentiel électrique du point de connexion F, permet ainsi de couper l'alimentation du grille-pain 1 dans une situation d'encrassement ou de vieillissement très important, générant tout de même un faible signal optique et électrique, mais ne correspondant pas à un fonctionnement normal et sécurisant de l'appareil. La tension d'alimentation 25 ainsi que les valeurs ohmiques des résistances R3 et R4 sont bien évidemment choisies pour tenir compte d'une légère dérive de la tension délivrée par l'échantillonneur bloqueur 24, ladite dérive provenant d'éventuels courants de fuite. Ce système permet également de détecter une défaillance de l'émetteur 10.

Les moyens d'autocalibration sont ainsi associés à un système électronique permettant de contrôler le seuil d'intensité du signal reçu par le détecteur optique 11 à chaque mise en marche du grille-pain 1. En outre les moyens d'autocalibration permettent de prendre en considération les dérives dans le temps des propriétés des composants électroniques et optiques. Les valeurs ohmiques des résistances R1, R2, R3 et R4 sont choisies en fonction de la sensibilité souhaitée du système et du seuil de détection minimum requis pour un fonctionnement optimal du dispositif de détection de fumée conforme à l'invention. Le seuil de détection pourra être adapté à la longueur du chemin optique 17 ou à la puissance de la source optique 10, ainsi qu'à la sensibilité du détecteur 11.

La figure 5 représente une variante complémentaire de réalisation des moyens électroniques 20 mis en oeuvre dans le dispositif conforme à l'invention. Les moyens électroniques 20 comprennent dans cette variante un microcontrôleur 21 permettant d'analyser le signal reçu par le détecteur optique 11, d'alimenter le comparateur 22 ainsi que de fournir un signal R à une porte logique OU. Cette dernière est également connectée sur la sortie S du comparateur 22. L'entrée inverseuse du comparateur 22 permet de lire le signal de sortie du conditionneur 11a et l'entrée non inverseuse est reliée à un seuil de tension fixe G, inférieur au signal normal du détecteur 11. Le microcontrôleur 21 est ainsi utilisé pour la détection de fumée par l'intermédiaire des calculs qu'il effectue et le comparateur 22 est utilisé pour détecter l'interruption d'un faisceau optique par accident dans l'appareil. Dans un tel cas de figure, il est indispensable de couper très vite l'alimentation électrique. Ceci est obtenu à l'aide du basculement à un niveau haut de la sortie S du comparateur 22. Ainsi, la porte logique OU génère un signal de commande d'arrêt T avec une présence de fumée détectée à l'aide du microcontrôleur 21 ou avec une interruption accidentelle du faisceau optique à l'aide du comparateur 22. Il est indispensable d'utiliser le comparateur 22 dans la mesure où ce dernier réagit plus rapidement à un fonctionnement anormal que le microcontrôleur 21, lequel est obligé d'effectuer des calculs. L'utilisation d'un microcontrôleur 21 travaillant lentement est envisageable dans cette variante de réalisation du dispositif conforme à l'invention.

Le dispositif conforme à l'invention permet ainsi de mettre en oeuvre un dispositif de sécurité permettant la détection de fumée, mais également une manipulation dangereuse du grille-pain 1.

Dans le cadre du procédé conforme à l'invention, il convient d'utiliser un rayonnement optique traversant au moins partiellement une ambiance de cuisson d'un tel grille-pain. Ceci revient à exclure une étape d'isolement du système émetteur-récepteur par rapport aux rayonnements ambiants ou de canalisation de la fumée.

Le procédé conforme à l'invention consiste également à utiliser d'une part un signal optique par exemple pulsé et d'autre part des moyens de filtration optique, électroniques ou numériques pour filtrer et isoler ledit signal optique reçu par le détecteur 11.

La mise en oeuvre d'un tel procédé autorise une grande latitude dans l'agencement des moyens de mise en oeuvre dudit procédé sur un grille-pain.

En effet, le fonctionnement du dispositif conforme à l'invention, permet de supprimer une chambre d'isolement ou d'analyse, jusqu'alors utilisée pour la détection de fumée. Ceci est nécessaire afin de rendre le dispositif capable de détecter des objets proches de la chambre de cuisson, et susceptibles de présenter un danger pour le fonctionnement de l'appareil et/ou pour l'utilisateur. Ainsi, la détection peut se faire efficacement malgré un chemin optique 17 traversant un volume ou un environnement soumis à l'influence des rayonnements ambiants.

Avantageusement, le signal électrique émis sur l'émetteur optique 10 est un signal optique pulsé. Il convient ainsi d'utiliser une entrée de validation 21a pour alimenter le comparateur 22. L'entrée de validation 21a permet de discriminer une atténuation du signal provenant d'une part d'une rupture du faisceau optique par l'intermédiaire d'une obstruction accidentelle du chemin optique 17, et d'autre part d'une atténuation du signal liée intrinsèquement à la pulsation de ce dernier. En effet, le signal pulsé, par exemple sous forme de créneaux, présente de façon répétitive des atténuations qu'il faut différencier par rapport à une atténuation accidentelle. L'entrée de validation 21a du comparateur 22 est de préférence pilotée par le microcontrôleur 21, lequel contrôle également l'émetteur 10. Ceci permet de synchroniser l'entrée de validation 21a avec la fréquence de l'émetteur 10.

Le signal pulsé sous forme de créneaux peut présenter différents rapports cycliques. D'autres signaux pulsés connus ne sortent pas du cadre de la présente invention.

Le signal optique utilisé dans le dispositif de sécurité du grille-pain conforme à l'invention présente préférentiellement une fréquence suffisamment éloignée de 50 Hz pour qu'il puisse être filtré efficacement. A titre d'exemple, une fréquence supérieure ou égale à 1500 Hz peut convenir. Le signal électrique délivré par le détecteur 11 présente ainsi une forme de créneaux de même fréquence que le signal optique. Il est évident que le détecteur 11 est compatible avec l'émetteur optique 10, réalisant la source lumineuse. Cette dernière rayonne préférentiellement dans le visible ou dans l'infrarouge et de préférence dans une partie du spectre s'étendant autour de 660 nm.

Le signal pulsé permet de distinguer ledit signal par rapport aux rayonnements ou aux signaux parasites du type lampe d'éclairage ou lumière du jour. Ces derniers signaux parasites auxquels il faut ajouter des rayonnements visibles et infrarouges émis par les éléments chauffants d'un grille-pain présentent un aspect continu plus ou moins important que les moyens électroniques 20 doivent ignorer. L'utilisation d'un signal pulsé permet d'arriver à cette fin. La détection de fumée ou d'objet par l'intermédiaire du dispositif conforme à l'invention se traduit donc par une simple diminution de l'amplitude des créneaux constitutifs du signal électrique pulsé.

Avantageusement, les moyens électroniques 20 peuvent être associés à des moyens de filtrage numérique par exemple à l'aide d'un microcontrôleur.

Avantageusement, le grille-pain conforme à l'invention représenté à la figure 1 comportant un dispositif optique de sécurité comporte des éléments chauffants présentant une puissance accrue, dans la mesure où le risque d'inflammation est écarté. Un tel grille-pain 1 s'adapte donc plus facilement à diverses variétés de pain.

Le grille-pain avec un dispositif de détection conforme à l'invention présente un intérêt non négligeable dans la mesure où il permet d'obtenir de bons résultats malgré un éloignement de l'émetteur 10 par rapport au récepteur 11, pouvant aller jusqu'à quelques dizaines de centimètres ou plus. A titre d'exemple, le chemin optique 17 peut ainsi s'étendre sur 30 cm.

Contrairement à toute attente, l'affaiblissement du signal reçu par le récepteur 11, dû à la distance parcourue, n'altère pas la fiabilité du dispositif.

A titre de variante de réalisation du dispositif conforme à l'invention, les moyens pour traiter le signal reçu par le récepteur 11 sont susceptibles d'effectuer une démodulation synchrone pour extraire le signal utile noyé dans le bruit.

Un autre avantage du grille-pain 1 comportant le dispositif de sécurité conforme à l'invention, réside dans le fait qu'il permet de détecter, par la fumée émise, un grillage trop important suite à un mauvais réglage de l'appareil pour une variété donnée de pain. Les éléments chauffants du grille-pain 1 sont coupés avant une carbonisation trop importante des tranches de pain. Ces dernières restent donc consommables dans la mesure où tout indice de grillage élevé provoque un dégagement de fumée, avant une carbonisation ou une inflammation.

Un autre avantage du grille-pain représenté à la figure 1 réside dans la possibilité d'arrêter instantanément le grillage et éventuellement obtenir l'éjection des tranches de pain par la simple interruption du faisceau lumineux généré par le système optique.

Le dispositif de sécurité du grille-pain conforme à l'invention présente également l'avantage de pouvoir être utilisé en tant que moyen de sécurité vis à vis de brûlures ou d'électrocution, comme il a déjà été expliqué.

Le dispositif de sécurité du grille-pain conforme à l'invention, peut également rester actif après l'arrêt des éléments chauffants et / ou l'éjection des tranches de pain, aussi longtemps que des parties chaudes de l'appareil présentent une température supérieure à une limite donnée. Dans un tel cas de figure, des moyens pour inhiber momentanément ou initialiser le système de détection sont nécessaires pour procéder à de nouvelles opérations de cuisson.

Le dispositif de détection du grille-pain conforme à l'invention peut également être agencé dans un sous ensemble amovible que l'on met en place ou que l'on retire d'un grille-pain 1 standard. Le dispositif de détection de fumée peut ainsi être agencé sur une structure enclipsable dans le bâti 3 et être pourvu d'un moyen d'alerte sonore.

## Revendications

1. Grille-pain, comportant une chambre de cuisson équipée d'éléments chauffants, ainsi qu'un dispositif optique de sécurité qui évite tout risque d'électrocution en coupant l'alimentation des moyens de chauffe bien avant que tout objet, ou la main de l'utilisateur n'atteigne les éléments sous tension, ledit dispositif comportant au moins un émetteur optique (10), au moins un détecteur optique (11) et des moyens électroniques (20) pour analyser un signal capté par le détecteur optique en reconnaissant une diminution de l'intensité du signal consécutivement à un encombrement du chemin optique (17) emprunté par le signal, le détecteur (11) et l'émetteur (10) optiques étant montés sur le grille-pain, au dessus de la chambre de cuisson dudit grille-pain, et de manière à éviter un isolement optique du dispositif et/ou du chemin optique (17), par rapport aux rayonnements de l'environnement de cuisson de l'appareil.

2. Grille-pain selon la revendication 1, **caractérisé en ce que** le détecteur optique 11, est monté au fond d'un canal (3b) présentant une ouverture (3c) centrée sur le chemin optique (17).

3. Grille-pain selon la revendication 2, **caractérisé en ce que** le canal (3b) présente un diaphragme (16) devant l'ouverture (3c).

4. Grille-pain selon l'une des revendications 1 à 3 **caractérisé en ce que** le détecteur (11) et l'émetteur (10) optiques sont disposés de façon à définir le chemin (17) optique à travers l'ambiance de cuisson de l'appareil.

5. Grille-pain selon l'une des revendications 1 à 4 **caractérisé en ce que** les moyens électroniques comprennent des moyens d'autocalibration pour fixer un seuil d'intensité du signal reçu par le détecteur optique (11), à chaque mise en marche de l'appareil.

6. Grille-pain selon la revendication 5 **caractérisé en ce que** les moyens électroniques (20) sont associés à un système de contrôle du seuil d'intensité du signal.

7. Grille-pain selon l'une des revendications 1 à 6 **caractérisé en ce qu'**il comprend un système de focalisation (14) ou de collimation (15) pour le signal optique.

8. Procédé de détection de la présence d'un corps présentant une certaine opacité, consistant à reconnaître l'atténuation d'un signal optique suite à un encombrement du chemin optique (17) emprunté par ledit signal et à piloter le fonctionnement d'un grille-pain tel que décrit dans la revendication 1, consécutivement à une telle détection, **caractérisé en ce qu'**il consiste :
- à utiliser un rayonnement optique traversant au moins partiellement l'ambiance de cuisson du grille-pain,
- à utiliser un émetteur optique (10) permettant de générer un signal optique pulsé,
- et à utiliser un détecteur optique (11) associé à des moyens de filtration pour filtrer et isoler le signal utile reçu par ledit détecteur (11).

9. Procédé selon la revendication 8 **caractérisé en ce qu'**il consiste à utiliser un signal optique présentant une fréquence supérieure ou égale à 1 500. Hz.

## Claims

1. A toaster comprising a toasting chamber fitted with heater elements, and an optical safety device which prevents any risk of electrocution by interrupting the power supply to the heater means well before any object or the hand of the user reaches a live element, said device comprising at least one light emitter (10), at least one light detector (11), and electronic means (20) for analyzing a signal picked up by the light detector by recognizing a reduction in the intensity of the signal following obstruction of the light path (17) followed by the signal, the detector (11) and the emitter (10) being mounted on the toaster above the toasting chamber of said toaster, and in such a manner as to prevent optical isolation of the device and/or of the light path (17) relative to the radiation from the toasting environment of the appliance.

2. A toaster according to claim 1, **characterized in that** the light detector (11) is mounted at the end of a channel (3b) presenting an opening (3c) that is centered on the light path (17).

3. A toaster according to claim 2, **characterized in that** the channel (3b) presents a diaphragm (16) in front of the opening (3c).

4. A toaster according to any one of claims 1 to 3, **characterized in that** the detector (11) and the emitter (10) are disposed in such a manner as to define the light path (17) through the toasting environment of the appliance.

5. A toaster according to any one of claims 1 to 4, **characterized in that** the electronic means comprise self-calibrating means for fixing an intensity threshold for the signal received by the light detector (11) each time the appliance is used.

6. A toaster according to claim 5, **characterized in that** the electronic means (20) are associated with a control system for controlling the intensity threshold of the signal.

7. A toaster according to any one of claims 1 to 6, **characterized in that** it comprises a focusing or sighting system (14, 15) for the light signal.

8. A method of detecting the presence of a body presenting a degree of opacity, the method consisting in recognizing the attenuation of a light signal following obstruction of the light path (17) followed by said signal, and in controlling the operation of a toaster, such as described in claim 1, following such detection, the method being **characterized in that** it consists:
· in using optical radiation passing at least in part through the toasting environment of the toaster;
· in using a light emitter (10) enabling a pulsed light signal to be generated; and
· in using a light detector (11) associated with filter means for filtering and isolating the wanted signal received by said detector (11).

9. A method according to claim 8, **characterized in that** it consists in using a light signal presenting a frequency not less than 1 500 Hz.

## Patentansprüche

1. Toaster mit einer Kochkammer, die mit Heizelementen ausgestattet ist, sowie einer optischen Sicherheitseinrichtung, die jede Gefahr eines elektrischen Schlages vermeidet, indem sie die Versorgung der Heizmittel unterbricht, deutlich bevor irgendein Objekt oder die Hand des Benutzers die unter Spannung stehenden Elemente erreicht, wobei die Einrichtung mindestens einen optischen Sender (10), mindestens einen optischen Detektor (11) und elektronische Mittel (20) zum Analysieren eines von dem optischen Detektor erfaßten Signals aufweist, indem eine Abnahme der Stärke des Signals infolge einer Blockierung des von dem Signal genommenen Lichtwegs (17) erkannt wird, wobei der optische Detektor (11) und der optische Sender (10) an dem Toaster über der Kochkammer des Toasters derart angebracht sind, daß eine optische Isolierung der Einrichtung und/oder des Lichtwegs (17) bezüglich der Strahlungen der Kochumgebung des Geräts vermieden ist.

2. Toaster nach Anspruch 1, **dadurch gekennzeichnet, daß** der optische Detektor (11) am Boden eines Kanals (3b) angebracht ist, der eine Öffnung (3c) aufweist, die auf den Lichtweg (17) zentriert ist.

3. Toaster nach Anspruch 2, **dadurch gekennzeichnet, daß** der Kanal (3b) eine Blende (16) vor der Öffnung (3c) aufweist.

4. Toaster nach einem der Ansprüche 1 bis 3, **dadurch gekennzeichnet, daß** der optische Detektor (11) und der optische Sender (10) derart angeordnet sind, daß sie den Lichtweg (17) durch die Kochumgebung des Geräts definieren.

5. Toaster nach einem der Ansprüche 1 bis 4, **dadurch gekennzeichnet, daß** die elektronischen Mittel Autokalibrierungsmittel aufweisen, um bei jedem Einschalten des Geräts einen Schwellenwert der Stärke des von dem optischen Detektor (11) empfangenen Signals festzulegen.

6. Toaster nach Anspruch 5, **dadurch gekennzeichnet, daß** die elektronischen Mittel (20) einem Kontrollsystem für den Schwellenwert der Stärke des Signals zugeordnet sind.

7. Toaster nach einem der Ansprüche 1 bis 6, **dadurch gekennzeichnet, daß** er ein Fokussierungssystem (14) oder ein Kollimationssystem (15) für das optische Signal aufweist.

8. Verfahren zur Erfassung der Anwesenheit eines Körpers, der eine gewisse Opazität besitzt, das darin besteht, die Dämpfung eines optischen Signals nach einer Blockierung des von dem Signal genommenen Lichtwegs (17) zu erkennen und den Betrieb eines Toasters wie dem nach Anspruch 1 beschriebenen nach einer solchen Erfassung zu steuern, **dadurch gekennzeichnet, daß** es darin besteht:
- eine optische Strahlung zu verwenden, die wenigstens teilweise die Kochumgebung des Toasters durchquert,
- einen optischen Sender (10) zu verwenden, mit dem ein gepulstes optisches Signal erzeugt werden kann,
- und einen optischen Detektor (11) zu verwenden, der Filtermitteln zugeordnet ist, um das von dem Detektor (11) empfangene Nutzsignal zu filtern und zu isolieren.

9. Verfahren nach Anspruch 8, **dadurch gekennzeichnet, daß** es darin besteht, ein optisches Signal zu verwenden, das eine Frequenz von größer oder gleich 1500 Hz aufweist.
